# EUROPEAN PATENT APPLICATION

(11) **EP 4 460 101 A1**
(43) Date of publication of application: **06.11.2024**
(21) Application number: 23787437.5
(22) Date of filing: 09.03.2023
(51) Int. Cl.: H04W 48/16

(54) **COMMUNICATION METHOD AND COMMUNICATION DEVICE**

(30) Priority: 13.04.2022 CN 202210383185
(71) Applicant: Huawei Technologies Co., Ltd., Shenzhen, Guangdong 518129 (CN)
(72) Inventor: YU, Youyang, Shenzhen, Guangdong 518129 (CN); SHI, Shufeng, Shenzhen, Guangdong 518129 (CN)
(74) Representative: Goddar, Heinz J.
(86) International application number: PCT/CN2023/080397
(87) International publication number: WO 2023/197789

(57) **Abstract**

Embodiments of this application provide a communication method and a communication apparatus. The communication method includes: A control network element receives first information from a UE, where the first information includes multi-3GPP access request indication information or change indication information. The control network element determines, based on the first information, whether to allow the UE to establish a multi-3 GPP access session. The multi-3GPP access request indication information indicates that the UE requests to establish the multi-3GPP access session, and the change indication information indicates that the UE allows the control network element to change from establishing a dual access session or a single access session to establishing the multi-3GPP access session. In this way, the control network element determines whether the UE can support a plurality of 3GPP connections at the same time, so that the UE can establish the multi-3GPP access session of NR and LTE.

## Description

This application claims priority to Chinese Patent Application No. 202210383185.3, filed with the China National Intellectual Property Administration on April 13, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

A multi-access protocol data unit session (multi-access protocol data unit session, MA PDU session) can support 3rd generation partnership project (3rd generation partnership project, 3GPP) access (such as long term evolution (long term evolution, LTE) access and new radio (new radio, NR) access) and non-3 GPP (non-3GPP) access (such as wireless fidelity (wireless fidelity, Wi-Fi) access and wired access) at the same time. However, for the multi-access PDU session, there are at most two connections, that is, one 3GPP connection and one non-3GPP connection. When a 5G core network (5th generation core network, 5GC) and a packet core (evolved packet core, EPC) are in converged deployment, a convergence network (the 5GC and the EPC in converged deployment) supports both 5G NR access and 4G LTE access. In this case, there may be two 3GPP links at the same time on a terminal side. The multi-access PDU session cannot support both NR and LTE connections, that is, two 3GPP connections, at the same time.

Therefore, in a 5GC and EPC convergence network architecture, how to support the NR access and the LTE access at the same time becomes an urgent problem to be resolved in the industry.

### SUMMARY

Embodiments of this application provide a communication method and a communication apparatus. A control network element determines whether a UE can support a plurality of 3GPP connections at the same time, so that the UE can establish a multi-3GPP access session of NR and LTE.

According to a first aspect, a communication method is provided. The method may be performed by a control network element, or may be performed by a component (for example, a chip or a circuit) of the control network element. This is not limited. For ease of description, the following uses an example in which the method is performed by the control network element for description.

The method may include: The control network element receives first information from a terminal device UE, where the first information includes multi-3GPP access request indication information or change indication information. The control network element determines, based on the first information, whether to allow the UE to establish a multi-3GPP access session. The multi-3GPP access request indication information indicates that the UE requests to establish the multi-3GPP access session, and the change indication information indicates that the UE allows the control network element to change from establishing a dual access session or a single access session to establishing the multi-3GPP access session.

According to the foregoing solution, the control network element determines, based on the first information of the terminal device, whether the UE can support a plurality of 3GPP connections at the same time.

With reference to the first aspect, in some implementations of the first aspect, the multi-3GPP access session includes a protocol data unit PDU session and/or a public data network PDN session.

With reference to the first aspect, in some implementations of the first aspect, that the control network element determines, based on the first information, whether to allow the UE to establish a multi-3GPP access session includes: The control network element determines, based on the first information and subscription data of the UE, whether to allow the multi-3GPP access session to be established.

According to the foregoing solution, the control network element can determine, based on a plurality of types of information in the first information and the subscription data of the UE, whether to allow the multi-3GPP access session to be established. This increases control on a network side and flexibility of the solution.

With reference to the first aspect, in some implementations of the first aspect, when the first information includes the multi-3GPP access request indication information, that the control network element determines, based on the first information and subscription data of the UE, whether to allow the multi-3 GPP access session to be established includes: The control network element determines, based on the multi-3GPP access request indication information, that the UE requests to establish the multi-3GPP access session. The control network element determines, based on the subscription data of the UE, whether to allow the UE to establish the multi-3GPP access session.

According to the foregoing solution, after learning that the UE requests to establish the multi-3GPP access session, the control network element determines, based on the subscription data of the UE, whether to allow the UE to establish the multi-3 GPP access session, to avoid a resource waste caused by determining whether to allow the UE to establish the multi-3GPP access session when the UE does not request to establish the multi-3GPP access session.

With reference to the first aspect, in some implementations of the first aspect, when the first information includes the change indication information, that the control network element determines, based on the first information and subscription data of the UE, whether to allow the multi-3GPP access session to be established includes: The control network element determines, based on the change indication information, that the UE allows the multi-3GPP access session to be established. The control network element determines, based on the subscription data of the UE, whether the multi-3GPP access session can be established for the UE.

According to the foregoing solution, after learning that the UE allows the multi-3GPP access session to be established, the control network element determines, based on the subscription data of the UE, whether to allow the UE to establish the multi-3GPP access session, to avoid a resource waste caused by determining, when the UE does not allow the multi-3GPP access session to be established, whether to allow the UE to establish the multi-3GPP access session.

With reference to the first aspect, in some implementations of the first aspect, when the control network element allows the UE to establish the multi-3GPP access session, the method includes: The control network element sends a multi-3GPP access establishment indication to a policy control network element PCF, where the multi-3GPP access establishment indication indicates to determine a steering mode. The control network element receives the steering mode from the PCF, where the steering mode indicates a traffic flow transmission sequence in the multi-3GPP access session. The control network element sends the steering mode to the UE.

According to the foregoing solution, when allowing the UE to establish the multi-3GPP access session, the control network element requests the PCF to determine the steering mode indicating the traffic flow transmission sequence in the multi-3GPP access session, to implement traffic flow routing and steering controlled by the network side, and avoid quality of service deterioration or a resource waste caused by improper access.

With reference to the first aspect, in some implementations of the first aspect, the steering mode includes at least one of the following: an active-standby mode with a secondary steering mode, a priority-based mode with a secondary steering mode, a load-balancing mode with a secondary steering mode, and a multi-3GPP access steering mode. The multi-3GPP access steering mode indicates a priority sequence of multi-3GPP access.

According to the foregoing solution, the steering mode includes a plurality of possible modes, to increase flexibility of the solution for traffic flow transmission of the UE.

With reference to the first aspect, in some implementations of the first aspect, the active-standby mode with a secondary steering mode includes an active-standby steering mode and a secondary steering mode. The active-standby steering mode indicates that 3GPP access or non-3GPP access is an active access technology, and the secondary steering mode indicates that LTE access or NR access is an active access technology.

According to the foregoing solution, when the steering mode is the active-standby mode with a secondary steering mode, the UE can determine the active access technology based on active and standby states of the 3GPP access and the non-3GPP access and active and standby states of the LTE access and the NR access, to improve flexibility of the access solution and avoid an additional resource waste.

With reference to the first aspect, in some implementations of the first aspect, the priority-based mode with a secondary steering mode includes a priority-based steering mode and a secondary steering mode. The priority-based steering mode indicates priorities of 3GPP access and non-3GPP access, and the secondary steering mode indicates a priority sequence of LTE access and NR access.

According to the foregoing solution, when the steering mode is the priority-based mode with a secondary steering mode, the UE can determine a preferential access sequence based on the priorities of the 3GPP access and the non-3GPP access and priorities of the LTE access and the NR access, to increase flexibility of the access solution and avoid an additional resource waste.

With reference to the first aspect, in some implementations of the first aspect, the load-balancing mode with a secondary steering mode includes a load-balancing steering mode and a secondary steering mode. The load-balancing steering mode indicates a steering ratio of 3GPP access to non-3GPP access, and the secondary steering mode indicates a steering ratio of LTE access to NR access.

According to the foregoing solution, when the steering mode is the load-balancing mode with a secondary steering mode, the UE can determine, based on the steering ratio of the 3GPP access to the non-3GPP access and the steering ratio of the LTE access to the NR access, a ratio of traffic flows transmitted by using different access technologies, to improve flexibility of the access solution and avoid an additional resource waste.

According to a second aspect, a communication method is provided. The method may be performed by a terminal device UE, or may be performed by a component (for example, a chip or a circuit) of the UE. This is not limited. For ease of description, the following uses an example in which the method is performed by the UE for description.

The method may include: The terminal device UE sends first information to a control network element, where the first information is used to determine whether to allow the UE to establish a multi-3GPP access session, and the first information includes multi-3 GPP access request indication information or change indication information. The multi-3GPP access request indication information indicates that the UE requests to establish the multi-3GPP access session, and the change indication information indicates that the UE allows the control network element to change from establishing a dual access session or a single access session to establishing the multi-3 GPP access session.

According to the foregoing solution, the UE can send the first information to the control network element. In this way, the control network element can determine, based on the first information, whether the UE can support a plurality of 3GPP connections at the same time, so that the UE can establish the multi-3GPP access session of NR and LTE.

With reference to the second aspect, in some implementations of the second aspect, the UE obtains a dual-registration capability indication, where the dual-registration capability indication indicates that the UE is allowed to register with a first network and a second network.

According to the foregoing solution, when the UE has a capability of supporting registration with the first network and the second network, the UE can request to establish the multi-3GPP access session to the control network element.

With reference to the second aspect, in some implementations of the second aspect, the multi-3GPP access session includes a protocol data unit PDU session and/or a public data network PDN session.

With reference to the second aspect, in some implementations of the second aspect, when the control network element allows the UE to establish the multi-3GPP access session, the method further includes: The UE receives a steering mode from the control network element, where the steering mode indicates a traffic flow transmission sequence in the multi-3GPP access session. The UE transmits a traffic flow based on the steering mode.

According to the foregoing solution, the UE can transmit the traffic flow based on the steering mode determined by the PCF, to avoid service quality deterioration or a resource waste caused by improper access.

With reference to the second aspect, in some implementations of the second aspect, the steering mode includes at least one of the following: an active-standby mode with a secondary steering mode, a priority-based mode with a secondary steering mode, a load-balancing mode with a secondary steering mode, and a multi-3GPP access steering mode. The multi-3GPP access steering mode indicates a priority sequence of multi-3GPP access.

According to the foregoing solution, the steering mode includes a plurality of possible modes, to increase flexibility of the solution for traffic flow transmission of the UE.

With reference to the first aspect, in some implementations of the second aspect, the active-standby mode with a secondary steering mode includes an active-standby steering mode and a secondary steering mode. The active-standby steering mode indicates that 3GPP access or non-3GPP access is an active access technology, and the secondary steering mode indicates that LTE access and NR access are active access technologies.

According to the foregoing solution, when the steering mode is the active-standby mode with a secondary steering mode, the UE can determine the active access technology based on active and standby states of the 3GPP access and the non-3GPP access and active and standby states of the LTE access and the NR access, to improve flexibility of the access solution and avoid an additional resource waste.

With reference to the first aspect, in some implementations of the second aspect, the priority-based mode with a secondary steering mode includes a priority-based steering mode and a secondary steering mode. The priority-based steering mode indicates priorities of 3GPP access and non-3GPP access, and the secondary steering mode indicates a priority sequence of LTE access and NR access.

According to the foregoing solution, when the steering mode is the priority-based mode with a secondary steering mode, the UE can determine a preferential access sequence based on the priorities of the 3GPP access and the non-3GPP access and priorities of the LTE access and the NR access, to increase flexibility of the access solution and avoid an additional resource waste.

With reference to the first aspect, in some implementations of the second aspect, the load-balancing mode with a secondary steering mode includes a load-balancing steering mode and a secondary steering mode. The load-balancing steering mode indicates a steering ratio of 3GPP access to non-3 GPP access, and the secondary steering mode indicates a steering ratio of LTE access to NR access.

According to the foregoing solution, when the steering mode is the load-balancing mode with a secondary steering mode, the UE can determine, based on the steering ratio of the 3GPP access to the non-3GPP access and the steering ratio of the LTE access to the NR access, a ratio of traffic flows transmitted by using different access technologies, to improve flexibility of the access solution and avoid an additional resource waste.

According to a third aspect, a communication apparatus is provided, including units configured to perform the method shown in the first aspect. The communication apparatus may be a control network element, or may be a chip or a circuit disposed in the control network element. This is not limited in this application.

The communication apparatus includes:
a transceiver unit, configured to receive first information from a terminal device UE, where the first information includes multi-3GPP access request indication information or change indication information; and a processing unit, configured to determine, based on the first information, whether to allow the UE to establish a multi-3GPP access session. The multi-3GPP access request indication information indicates that the UE requests to establish the multi-3GPP access session, and the change indication information indicates that the UE allows the control network element to change from establishing a dual access session or a single access session to establishing the multi-3GPP access session.

With reference to the third aspect, in some implementations of the third aspect, the multi-3GPP access session includes a protocol data unit PDU session and/or a public data network PDN session.

With reference to the third aspect, in some implementations of the third aspect, the processing unit is further configured to determine, based on the first information and subscription data of the UE, whether to allow the multi-3GPP access session to be established.

With reference to the third aspect, in some implementations of the third aspect, the processing unit is further configured to determine, based on the multi-3GPP access request indication information, that the UE requests to establish the multi-3GPP access session. The processing unit is further configured to determine, based on the subscription data of the UE, whether to allow the UE to establish the multi-3GPP access session.

With reference to the third aspect, in some implementations of the third aspect, the processing unit is further configured to determine, based on the change indication information, that the UE allows the multi-3 GPP access session to be established. The processing unit is further configured to determine, based on the subscription data of the UE, whether the multi-3GPP access session can be established for the UE.

With reference to the third aspect, in some implementations of the third aspect, the transceiver unit is further configured to send a multi-3GPP access establishment indication to a policy control network element PCF, where the multi-3GPP access establishment indication indicates to determine a steering mode. The transceiver unit is further configured to receive the steering mode from the PCF, where the steering mode indicates a traffic flow transmission sequence in the multi-3GPP access session. The control network element sends the steering mode to the UE.

With reference to the third aspect, in some implementations of the third aspect, the steering mode includes at least one of the following: an active-standby mode with a secondary steering mode, a priority-based mode with a secondary steering mode, a load-balancing mode with a secondary steering mode, and a multi-3GPP access steering mode. The multi-3GPP access steering mode indicates a priority sequence of multi-3GPP access.

With reference to the third aspect, in some implementations of the third aspect, the active-standby mode with a secondary steering mode includes an active-standby steering mode and a secondary steering mode. The active-standby steering mode indicates that 3GPP access or non-3GPP access is an active access technology, and the secondary steering mode indicates that LTE access or NR access is an active access technology.

With reference to the third aspect, in some implementations of the third aspect, the priority-based mode with a secondary steering mode includes a priority-based steering mode and a secondary steering mode. The priority-based steering mode indicates priorities of 3GPP access and non-3GPP access, and the secondary steering mode indicates a priority sequence of LTE access and NR access.

With reference to the third aspect, in some implementations of the third aspect, the load-balancing mode with a secondary steering mode includes a load-balancing steering mode and a secondary steering mode. The load-balancing steering mode indicates a steering ratio of 3GPP access to non-3GPP access, and the secondary steering mode indicates a steering ratio of LTE access to NR access.

For explanations of related content and beneficial effect of the communication apparatus provided in the third aspect, refer to the method shown in the first aspect. Details are not described herein again.

According to a fourth aspect, a communication apparatus is provided, including units configured to perform the method shown in the second aspect. The communication apparatus may be a UE, or may be a chip or a circuit disposed in the UE. This is not limited in this application.

The communication apparatus includes:
a transceiver unit, configured to send first information to a control network element, where the first information is used to determine whether to allow the UE to establish a multi-3GPP access session, and the first information includes multi-3GPP access request indication information or change indication information. The multi-3GPP access request indication information indicates that the UE requests to establish the multi-3GPP access session, and the change indication information indicates that the UE allows the control network element to change from establishing a dual access session or a single access session to establishing the multi-3GPP access session.

With reference to the fourth aspect, in some implementations of the fourth aspect, the processing unit is configured to obtain a dual-registration capability indication, where the dual-registration capability indication indicates that the UE is allowed to register with a first network and a second network.

With reference to the fourth aspect, in some implementations of the fourth aspect, the multi-3GPP access session includes a protocol data unit PDU session and/or a public data network PDN session.

With reference to the fourth aspect, in some implementations of the fourth aspect, the transceiver unit is further configured to receive a steering mode from the control network element, where the steering mode indicates a traffic flow transmission sequence in the multi-3GPP access session. The processing unit is further configured to transmit a traffic flow based on the steering mode.

With reference to the fourth aspect, in some implementations of the fourth aspect, the steering mode includes at least one of the following: an active-standby mode with a secondary steering mode, a priority-based mode with a secondary steering mode, a load-balancing mode with a secondary steering mode, and a multi-3GPP access steering mode. The multi-3GPP access steering mode indicates a priority sequence of multi-3GPP access.

With reference to the fourth aspect, in some implementations of the fourth aspect, the active-standby mode with a secondary steering mode includes an active-standby steering mode and a secondary steering mode. The active-standby steering mode indicates that 3GPP access or non-3GPP access is an active access technology, and the secondary steering mode indicates that LTE access or NR access is an active access technology.

With reference to the fourth aspect, in some implementations of the fourth aspect, the priority-based mode with a secondary steering mode includes a priority-based steering mode and a secondary steering mode. The priority-based steering mode indicates priorities of 3GPP access and non-3GPP access, and the secondary steering mode indicates a priority sequence of LTE access and NR access.

With reference to the fourth aspect, in some implementations of the fourth aspect, the load-balancing mode with a secondary steering mode includes a load-balancing steering mode and a secondary steering mode. The load-balancing steering mode indicates a steering ratio of 3 GPP access to non-3 GPP access, and the secondary steering mode indicates a steering ratio of LTE access to NR access.

For explanations of related content and beneficial effect of the communication apparatus provided in the fourth aspect, refer to the method shown in the second aspect. Details are not described herein again.

According to a fifth aspect, a communication apparatus is provided. The apparatus includes: a memory, configured to store programs; and at least one processor, configured to execute the computer programs or instructions stored in the memory, to perform the method in any possible implementation of the first aspect or the second aspect.

In an implementation, the apparatus is a control network element.

In another implementation, the apparatus is a chip, a chip system, or a circuit used in a control network element.

According to a sixth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores program code configured to be executed by a device, and the program code includes the method according to any one of the possible implementations of the first aspect or the second aspect.

According to an eighth aspect, a computer program product that includes instructions is provided. When the computer program product is run on a computer, the computer is enabled to perform the method according to any one of the possible implementations of the first aspect or the second aspect.

According to a ninth aspect, a chip is provided. The chip includes a processor and a communication interface. The processor reads, through the communication interface, instructions stored in a memory, to perform the method according to any one of the possible implementations of the first aspect or the second aspect.

Optionally, in an implementation, the chip further includes a memory. The memory stores a computer program or instructions, the processor is configured to execute the computer program or the instructions stored in the memory, and when the computer program or the instructions are executed, the processor is configured to perform the method according to any one of the possible implementations of the first aspect or the second aspect.

According to a tenth aspect, a communication system is provided, including one or more of the foregoing control network element and UE.

### BRIEF DESCRIPTION OF DRAWINGS

FIG. 1 is a diagram of a network architecture to which an embodiment of this application is applicable;
FIG. 2 is a diagram of another network architecture to which an embodiment of this application is applicable;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a block diagram of a communication apparatus 600 according to an embodiment of this application;
FIG. 7 is a block diagram of another communication apparatus 700 according to an embodiment of this application; and
FIG. 8 is a diagram of a chip system 800 according to an embodiment of this application.

### DESCRIPTION OF EMBODIMENTS

The following describes technical solutions of embodiments in this application with reference to the accompanying drawings.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

First, a network architecture to which this application is applicable is briefly described.

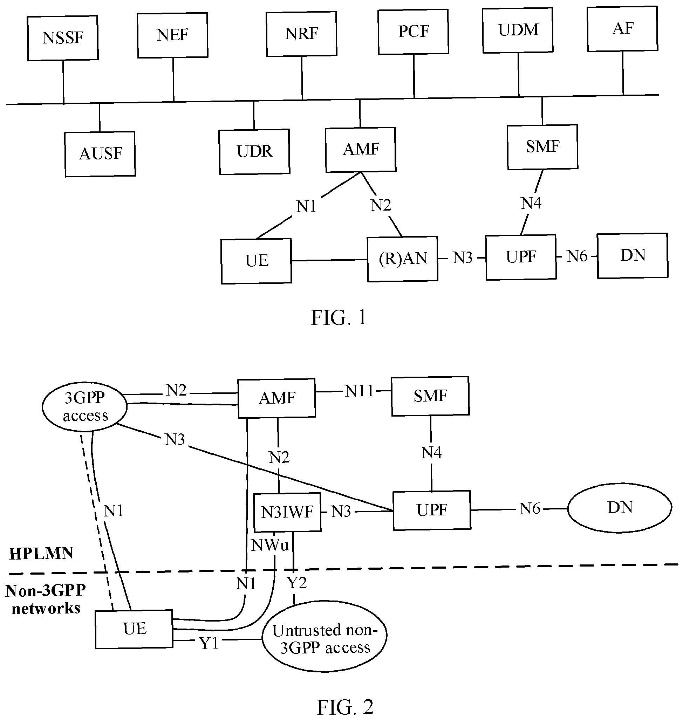

For example, FIG. 1 is a diagram of a network architecture.

As shown in FIG. 1, a 5G system (the 5th generation system, 5GS) is used as an example of the network architecture. The network architecture may include three parts, namely a UE part, a data network (data network, DN) part, and an operator network part. An operator network may include one or more of the following network elements: a (radio) access network ((radio) access network, (R)AN) device, a user plane function (user plane function, UPF) network element, an authentication server function (authentication server function, AUSF) network element, a unified database (unified data repository, UDR) network element, an access and mobility management function (access and mobility management function, AMF) network element, an SMF network element, a network exposure function (network exposure function, NEF) network element, a network repository function (network repository function, NRF) network element, a policy control function (policy control function, PCF) network element, a unified data management (unified data management, UDM) network element, and application function (application function, AF) network element. In the foregoing operator network, parts other than the RAN part may be referred to as a core network part. In this application, a user equipment, the (radio) access network device, the UPF network element, the AUSF network element, the UDR network element, the AMF network element, the SMF network element, the NEF network element, the NRF network element, the PCF network element, the UDM network element, and the AF network element are respectively referred to as the UE, the (R)AN device, the UPF, the AUSF, the UDR, the AMF, the SMF, the NEF, the NRF, the PCF, the UDM, and the AF for short.

The following briefly describes each network element related in FIG. 1.

### 1. UE

The UE mainly accesses a 5G network through a radio air interface, and obtains a service. The UE interacts with the RAN through the air interface, and interacts with the AMF in the core network by using non-access stratum (non-access stratum, NAS) signaling.

The UE in this embodiment of this application may also be referred to as a terminal device, a user, an access terminal, a subscriber unit, a subscriber station, a mobile station, a remote station, a remote terminal, a mobile device, a user terminal, a terminal, a wireless communication device, a user agent, or a user apparatus. The UE may be a cellular phone, a smartwatch, a wireless data card, a mobile phone, a tablet computer, a personal digital assistant (personal digital assistant, PDA) computer, a wireless modem, a handheld device, a laptop computer, a machine type communication (machine type communication, MTC) terminal, a computer with a wireless transceiver function, an Internet of Things terminal, a virtual reality terminal device, an augmented reality terminal device, a wearable device, a vehicle, a terminal in device-to-device (device-to-device, D2D) communication, a terminal in vehicle to everything (vehicle to everything, V2X) communication, a terminal in machine type communication (machine-type communication, MTC), a terminal in the Internet of Things (internet of things, IOT), a terminal in intelligent office, a terminal in industrial control, a terminal in unmanned driving, a terminal in remote surgery, a terminal in a smart grid, a terminal in transportation security, a terminal in a smart city, a terminal in a smart home, and a terminal in satellite communication (for example, a satellite phone or a satellite terminal). The UE may also be a customer-premises equipment (customer-premises equipment, CPE), a telephone, a router, a network switch, a home gateway (residential gateway, RG), a set-top box, a fixed mobile convergence product, a home networking adapter, or an Internet access gateway.

A specific technology used by the UE and a specific device form of the UE are not limited in this embodiment of this application.

### 2. (R)AN device

The (R)AN device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection and interworking between a terminal device and a 3GPP core network by using the non-3 GPP technology.

The AN device can be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a base station (base station, BS) in WiMAX, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next-generation 6G communication system.

A specific technology used by the AN device and a specific device form of the AN device are not limited in this embodiment of this application.

### 3. UPF

The UPF mainly provides user plane functions such as forwarding and processing of user packets, connection to a DN, session anchor, and quality of service (quality of service, QoS) policy enforcement. For example, the UPF may receive user plane data from the DN, and send the user plane data to the terminal device via the AN device. The UPF may alternatively receive user plane data from the terminal device via the AN device, and forward the user plane data to the DN.

### 4. DN

The DN is an operator network mainly used for providing a data service for the UE, for example, the Internet (Internet), a third-party service network, or an IP multimedia service (IP multimedia service, IMS) network.

### 5. AUSF

The AUSF is mainly for user authentication and the like.

### 6. UDR

The UDR mainly provides a capability of storing subscription data, policy data, and capability exposure data.

### 7. AMF

The AMF is mainly for functions such as access control, mobility management, and attachment and detachment.

### 8. SMF

The SMF is mainly responsible for session management (such as session establishment, modification, and release), Internet Protocol (internet protocol, IP) address allocation and management, UPF selection and control, and the like.

### 9. NEF

The NEF is mainly for securely exposing, to the outside, a service, a capability, and the like that are provided by a 3GPP network function.

### 10. NRF

The NRF is mainly for storing a network function entity, description information of a service provided by the network function entity, and the like.

### 11. PCF

The PCF is mainly for guiding a unified policy framework for network behavior, and providing policy rule information and the like for a control plane network element (for example, the AMF or the SMF).

### 12. UDM

The UDM is mainly for subscription data management of the UE, including storage and management of a UE identifier, access authorization of the UE, and the like.

### 13. AF

The AF is mainly for providing a service for the 3GPP network, for example, interacting with the PCF to perform policy control.

In the network architecture shown in FIG. 1, the network elements may communicate with each other through interfaces shown in the figure, and some interfaces may be implemented in a manner of service-based interfaces. As shown in FIG. 1, the UE may communicate with the AMF through an N1 interface. The RAN may communicate with the AMF through an N2 interface. A relationship between another interface and each network element is shown in FIG. 1. For brevity, details are not described herein.

It should be understood that the network architecture shown above is merely an example for description, and a network architecture applicable to this embodiment of this application is not limited thereto. Any network architecture that can implement functions of the foregoing network elements is applicable to this embodiment of this application.

It should be further understood that functions or the network elements such as the AMF, the SMF, the UPF, the PCF, the UDM, the AUSF, the UDR, the NEF, the NRF, and the AF shown in FIG. 1 may be understood as network elements configured to implement different functions, for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.

One or more services may be obtained through division into the network elements or the functions. Further, a service that is independent of a network function may occur. In this application, an instance of the function, an instance of the service included in the function, and an instance of the service that is independent of the network function may all be referred to as service instances. In addition, in actual deployment, network elements with different functions may be co-located. For example, the access and mobility management network element may be co-located with the session management network element. The session management network element may be co-located with the user plane network element. When two network elements are co-located, interaction between the two network elements provided in this embodiment of this application becomes an internal operation of the co-located network element or may be omitted.

It should be further understood that the names are defined merely for ease of distinguishing between different functions, and should not constitute any limitation on this application. This application does not exclude a possibility of using another name in a 6G network and another future network. For example, in the 6G network, some or all of the foregoing network elements may still use terms in 5G, or may use other names.

It should be further understood that names of interfaces between the foregoing network elements in FIG. 1 are only examples, and the interfaces may have other names during a specific implementation. This is not specifically limited in this application. In addition, names of messages (or signaling) transmitted between the foregoing network elements are merely examples, and do not constitute any limitation on functions of the messages.

For ease of understanding of this embodiment of this application, terms related in this application are described briefly.

Multi-access protocol data unit session (multi-access protocol data unit session, MA PDU session): For a protocol data unit (protocol data unit, PDU) session, one or more of the following access technologies may be supported: 3GPP access, non-3GPP access, LTE access, 5GRAN access, trusted non-3GPP access, untrusted non-3GPP access, trusted WLAN access, untrusted WLAN access, fixed network access, and the like, so that a traffic flow moves between different access technologies or the foregoing traffic flow is transmitted by using a plurality of access technologies at the same time, for example, a traffic flow 1 is transmitted by using an access technology 1, and subsequently the traffic flow 1 moves to be transmitted by using an access technology 2, or a traffic flow 1 is transmitted by using both the access technology 1 and the access technology 2.

It should be noted that the foregoing terms or technologies all belong to the conventional technology, and are not limited.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing briefly describes the terms related in this application, and details are not described in the following embodiments. The following describes in detail a communication method provided in embodiments of this application with reference to the accompanying drawings. Embodiments provided in this application may be applied to the network architecture shown in FIG. 1. This is not limited.

The network architecture shown in FIG. 1 not only supports access to a core network side by using a radio technology (such as LTE and 5G (R)AN) defined in a 3GPP standard group, but also supports access to the core network side by using a non-3GPP interworking function (non-3GPP interworking function, N3IWF) or a next generation access gateway (next generation packet data gateway, ngPDG) in a non-3GPP access technology.

FIG. 2 shows a network architecture when a 5G core network supports untrusted non-3GPP (N3G) access. An N3IWF is an untrusted non-3GPP access gateway. An untrusted non-3GPP access network may be an untrusted WLAN access network or the like. This is not limited.

In FIG. 2, a UE may communicate with the N3IWF through an NWu interface, the N3IWF may communicate with a UPF through an N3 interface, the UE may communicate with the untrusted non-3GPP access network through a Y1 interface, and the N3IWF may communicate with the untrusted non-3GPP access network through a Y2 interface. A relationship between another interface and each network element is shown in FIG. 2. For brevity, details are not described herein.

It should be noted that, for trusted non-3GPP access and untrusted non-3GPP access, the core network may be a point-to-point interface protocol shown in FIG. 2, or use a service-oriented interface consistent with the 3GPP access core network architecture shown in FIG. 1.

Based on the network architectures in FIG. 1 and FIG. 2, an existing multi-access PDU session includes 3GPP access (for example, LTE access and NR access) and non-3GPP access (for example, Wi-Fi access and wired access), and there are at most two connections, to be specific, one 3GPP connection and one non-3GPP connection. When a 5GC network and an EPC network are in converged deployment, a convergence network (the 5GC and the EPC in converged deployment) supports both 5G NR access and 4G LTE access. In this case, there may be two 3GPP links at the same time on a terminal side. The multi-access PDU session cannot support both NR and LTE connections, that is, two 3GPP connections, at the same time.

This application provides a communication method, to support NR access and LTE access at the same time in a network architecture in which the 5GC and the EPC are converged.

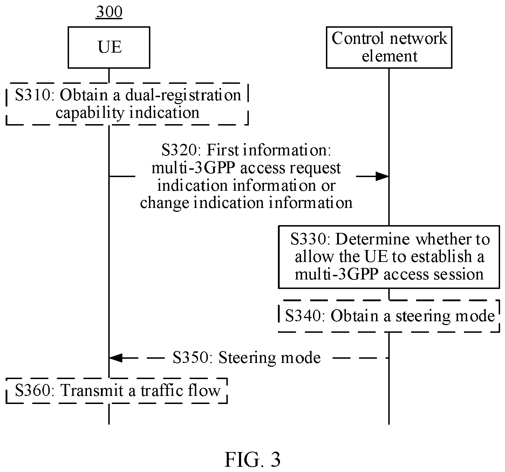

FIG. 3 is a diagram of a communication method 300 according to an embodiment of this application. The method 300 may include the following steps.

S310: A UE obtains a dual-registration capability indication.

The dual-registration capability indication indicates that the UE is allowed to register with a first network and a second network.

For example, the first network may be a 5G core network (5G core network, 5GC), and the second network may be a packet core (evolved packet core, EPC), that is, a 4G core network. This is not limited in this application.

In a possible implementation, the UE currently supports dual registration, to be specific, the UE can register with the first network and the second network at the same time.

In another possible implementation, the UE receives, in a process of registering with a network, the dual-registration capability indication from a network side.

For example, the dual-registration capability indication may be a Network support of Interworking without N26 indication, and the Network support of Interworking without N26 indication indicates that the network side supports an EPC and 5GC interaction process with a non-N26 interface. This is not limited.

It should be understood that S310 is optional.

Further, the UE sends first information to a control network element, to request to establish a multi-3 GPP access session.

S320: The UE sends the first information to the control network element.

Correspondingly, the control network element receives the first information from the UE.

Optionally, after obtaining the dual-registration capability indication, the UE sends the first information to the control network element.

It should be understood that the UE may include the first information in information such as a PDU session establishment request message, a PDU session update request message, and an uplink non-standalone networking transmission message, and send the information to the control network element. This is not limited in this application. In other words, when the UE requests to the control network element to establish or update a PDU session, the UE may include the first information in the request message and send the request message to the control network element.

The first information is used to determine whether to allow the UE to establish the multi-3GPP access session.

It should be understood that multi-3GPP access means that a multi-access PDU session includes two 3GPP links, to be specific, LTE access and NR access.

It should be noted that whether the multi-access PDU session includes a non-3GPP link is not limited in this application.

Specifically, the first information includes multi-3GPP access request indication information or change indication information.

The multi-3GPP access request indication information indicates that the UE requests to establish the multi-3GPP access session.

The change indication information indicates that the UE allows the control network element to change from establishing a dual access session or a single access session to establishing the multi-3GPP access session. In other words, the change indication information indicates that the UE supports multi-3GPP access session establishment when the UE requests to establish the dual access session or the single access session.

Optionally, the first information further includes capability indication information, and the capability indication information indicates that the UE has a capability of supporting the multi-3GPP access session.

S330: The control network element determines, based on the first information, whether to allow the UE to establish the multi-3GPP access session.

It should be understood that after receiving the first information from the UE, the control network element determines, based on the first information and subscription data of the UE, whether to allow the UE to establish the multi-3GPP access session.

It should be understood that the control network element determines, based on different content of the first information in the following several manners, whether to allow the UE to establish the multi-3 GPP access session.

In a possible implementation, when the first information includes the multi-3GPP access request indication information, the control network element determines, based on the multi-3GPP access request indication information and the subscription data of the UE, whether to allow the UE to establish the multi-3GPP access session.

Specifically, after receiving the multi-3GPP access request indication information, the control network element learns, based on the multi-3GPP access request indication information, that the UE requests to establish the multi-3GPP access session. In other words, when the information such as the PDU session establishment request message sent by the UE carries the multi-3GPP access request indication information, the control network element learns that the UE currently requests to establish the multi-3GPP access session. Further, the control network element determines, based on the subscription data of the UE, whether to allow the UE to establish the multi-3GPP access session.

For example, when a Core Network type restriction parameter in the subscription data of the UE indicates that dual registration of the UE to the EPC and the 5GC is supported, the control network element allows the UE to establish the multi-3GPP access session. When a Core Network type restriction parameter indicates that dual registration of the UE to the EPC and the 5GC is not supported, the control network element does not allow the UE to establish the multi-3GPP access session.

For example, when slice information in the subscription data of the UE indicates that the UE can support the LTE access and the NR access, the control network element allows the UE to establish the multi-3GPP access session. When slice information in the subscription data of the UE indicates that the UE does not support the LTE access and the NR access, the control network element does not allow the UE to establish the multi-3GPP access session.

In another possible implementation, when the first information includes the change indication information, the control network element determines, based on the change indication information and the subscription data of the UE, whether to allow the UE to establish the multi-3GPP access session.

Specifically, after receiving the change indication information, the control network element learns, based on the change indication information, that the UE allows the multi-3GPP access session to be established. In other words, when the information such as the PDU session establishment request message sent by the UE carries the change indication information, the control network element learns that the UE currently allows the multi-3GPP access session to be established, to be specific, the UE currently has a capability of changing to establishing the multi-3GPP access session when the UE requests to establish the dual access session or the single access session. Further, the control network element determines, based on the subscription data of the UE, whether to allow the UE to establish the multi-3GPP access session.

It should be noted that a specific determining manner in which the control network element determines whether to allow the UE to establish the multi-3GPP access session is similar to the manner in which the control network element determines, when the first information includes the multi-3 GPP access request indication information, whether to allow the UE to establish the multi-3GPP access session. To avoid repetition, details are not described herein again.

In another possible implementation, when the first information includes the capability indication information, the control network element determines, based on the change indication information and the subscription data of the UE, whether to allow the UE to establish the multi-3GPP access session.

Specifically, after receiving the capability indication information, the control network element learns, based on the capability indication information, that the UE has the capability of establishing the multi-3GPP access session. In other words, when the information such as the PDU session establishment request message sent by the UE carries the capability indication information, the control network element learns of the capability that the UE can currently establish the multi-3GPP access session. Further, the control network element determines, based on the subscription data of the UE, whether to allow the UE to establish the multi-3GPP access session.

It should be noted that a specific determining manner in which the control network element determines whether to allow the UE to establish the multi-3GPP access session is similar to the manner in which the control network element determines, when the first information includes the multi-3 GPP access request indication information, whether to allow the UE to establish the multi-3GPP access session. To avoid repetition, details are not described herein again.

It should be noted that when the control network element does not allow the UE to establish the multi-3GPP access session, the control network element further determines whether to allow the UE to establish a dual access PDU session (to be specific, a PDU session supporting 3GPP access and non-3GPP access at the same time) or a single access PDU session.

It should be noted that, in this embodiment of this application, a specific manner in which the control network element determines whether to allow the UE to establish the dual access PDU session or the single access PDU session is not limited. For details, refer to current related descriptions about PDU session establishment.

According to the foregoing solution, the control network element can determine, based on the first information of the terminal device, whether the UE can support a plurality of 3GPP connections at the same time, or the control network element can determine, based on the first information, whether the UE requests to establish a plurality of 3GPP connections or whether the UE allows a plurality of 3GPP connections to be established.

When the control network element allows the UE to establish the multi-3GPP access session, the method procedure shown in FIG. 3 may further include the following steps.

S340: The control network element obtains a steering mode.

It should be understood that when the control network element allows the UE to establish the multi-3GPP access session, the control network element requests, from a policy control network element PCF, the steering mode used by the UE for traffic flow transmission.

Specifically, the control network element sends a multi-3GPP access establishment indication to the PCF, where the multi-3GPP access establishment indication indicates the PCF to determine the steering mode. The PCF determines, based on the multi-3GPP access establishment indication, the steering mode used by the UE for traffic flow transmission, and sends the steering mode to the control network element.

The steering mode indicates a traffic flow transmission sequence in the multi-3GPP access session.

Specifically, the steering mode includes at least one of the following: an active-standby mode with a secondary steering mode, a priority-based mode with a secondary steering mode, a load-balancing mode with a secondary steering mode, and a multi-3GPP access steering mode.

In the active-standby mode with a secondary steering mode, 3GPP access or non-3GPP access is first determined as an active access technology based on an active-standby (active-standby) steering mode and active and standby states of access technologies, and when the 3GPP access is selected, LTE access or NR access is determined as an active access technology based on an indication of a secondary steering mode.

It should be understood that the active access technology is an access technology that is first used for traffic flow transmission. When the current active access technology is unavailable, a traffic flow is transmitted by using another access technology.

For example, if the active-standby steering mode in the active-standby mode with a secondary steering mode indicates that the 3GPP access is the active (active) access technology and the non-3GPP access is a standby (standby) access technology, the 3GPP access is selected. Then the NR access is selected based on an indication in the secondary steering mode that the NR access is the active access technology. When the NR access is unavailable, the LTE access is selected. When the LTE access is unavailable, the standby non-3GPP access is selected. In other words, in this case, an access sequence indicated by the active-standby mode with a secondary steering mode is the NR access, the LTE access, and the non-3GPP access in sequence.

For example, in the active-standby mode with a secondary steering mode, if the active-standby steering mode indicates that the non-3GPP access is the active access technology, and the 3GPP access is a standby access technology, the non-3GPP access is selected. When the non-3GPP access is unavailable, the LTE access is selected based on an indication in the secondary steering mode that the LTE access is the active access technology. When the LTE access is unavailable, the NR access is selected. In other words, in this case, an access sequence indicated by the active-standby mode with a secondary steering mode is the non-3GPP access, the LTE access, and the NR access in sequence.

In the priority-based mode with a secondary steering mode, a preferential access sequence is first determined based on priorities of 3GPP access and non-3GPP access that are indicated in a priority-based steering mode. When the 3GPP access is selected, a preferential access sequence is then determined based on priorities of LTE access and NR access that are indicated in a secondary steering mode.

For example, if the priority-based (priority-based) steering mode in the priority-based mode with a secondary steering mode indicates that the 3 GPP access has a high priority and the non-3 GPP access has a low priority, the 3GPP access is preferentially selected. Then the NR access is preferentially selected based on an indication in the secondary steering mode that the priority of the NR access is higher than the priority of the LTE access. When an NR link is congested, the LTE access is selected for an additional traffic flow (offload traffic). When an LTE link is congested, the low-priority non-3GPP access is selected for an additional traffic flow. In other words, in this case, an access sequence indicated by the priority-based mode with a secondary steering mode is the NR access, the LTE access, and the non-3GPP access in sequence.

For example, if the priority-based steering mode in the priority-based mode with a secondary steering mode indicates that the non-3GPP access has a high priority and the 3GPP access has a low priority, the non-3GPP access is preferentially selected. When a non-3GPP link is congested, the LTE access is preferentially selected based on an indication in the secondary steering mode that the priority of the LTE access is higher than the priority of the NR access. When an LTE link is congested, the NR access is selected for an additional traffic flow. In other words, in this case, an access sequence indicated by the priority-based mode with a secondary steering mode is the non-3GPP access, the LTE access, and the NR access in sequence.

In the load-balancing mode with a secondary steering mode, a traffic flow is transmitted separately through a non-3GPP access link, an LTE link, and an NR link based on a steering ratio that is of 3GPP access to non-3GPP access and that is indicated in a load-balancing (load-balancing) steering mode and a steering ratio that is of NR access to LTE access and that is indicated in a secondary steering mode.

For example, if a steering ratio that is of the non-3GPP access to the 3GPP access and that is in the load-balancing mode with a secondary steering mode is 2:8, and a steering ratio that is of the LTE access to the NR access and that is in the secondary steering mode is 1:1, the UE transmits 20% of the traffic flow through the non-3GPP link, 40% of the traffic flow through the LTE link, and 40% of the traffic flow through the NR link.

The multi-3GPP access steering mode indicates an access priority sequence of multi-3GPP access. The multi-3GPP access includes but is not limited to the LTE access, the NR access, trusted WLAN access, untrusted WLAN access, wired technology access, and the like. This is not limited.

For example, an access priority sequence indicated in the multi-3GPP access steering mode is the NR access, the LTE access, and the trusted WLAN access in sequence, the NR access, the trusted WLAN access, and the LTE access in sequence, or the untrusted WLAN access, the LTE access, and NR relay access in sequence. This is not limited.

It should be noted that a specific sequence of the foregoing four steering modes is not limited in this application.

Optionally, in S350, the control network element sends the steering mode to the UE.

Correspondingly, the UE receives the steering mode from the control network element.

It should be understood that, after obtaining the steering mode, the control network element sends the steering mode to the UE.

Optionally, the control network element may include the steering mode in first response information and send the first response information to the UE. The control network element may alternatively include the steering mode in other information and send the other information to the UE. This is not limited in this application.

S360: The UE transmits the traffic flow.

It should be understood that, after receiving the steering mode from the control network element, the UE transmits the traffic flow based on the steering mode.

For example, if the steering mode is the active-standby mode with a secondary steering mode, and an access sequence indicated by the steering mode is the NR access, the LTE access, and the non-3 GPP access in sequence, the UE preferentially selects the NR access. When the NR access is unavailable, the UE selects the LTE access. When the LTE access is unavailable, the UE selects the non-3GPP access.

For example, if the steering mode is the priority-based mode with a secondary steering mode, and an access sequence indicated by the steering mode is the non-3GPP access, the LTE access, and the NR access in sequence, the UE preferentially selects the non-3GPP access. When a non-3GPP link is congested, the LTE access is selected for an additional traffic flow. When an LTE link is congested, the NR access is selected for an additional traffic flow.

For example, if the steering mode is the load-balancing mode with a secondary steering mode, a steering ratio that is of the non-3GPP access to the 3GPP access and that is indicated by the steering mode is 4:6, and a steering ratio of the LTE access to the NR access is 1:2, the UE transmits 40% of the traffic flow through a non-3GPP link, 20% of the traffic flow through an LTE link, and 40% of the traffic flow through an NR link.

For example, if the steering mode is the multi-3GPP access steering mode, and an access priority sequence indicated by the steering mode is the NR access, the LTE access, and the trusted WLAN access in sequence, the UE preferentially selects the NR access. When the NR access is unavailable, the UE selects the LTE access. When the LTE access is unavailable, the UE selects the trusted WLAN access.

According to the foregoing solution, the control network element can determine, based on the first information of the terminal device, whether the UE can support a plurality of 3GPP connections at the same time. When the UE can support the plurality of 3GPP connections at the same time, the UE transmits the traffic flow based on the steering mode determined by the PCF, to avoid a resource waste caused by improper access.

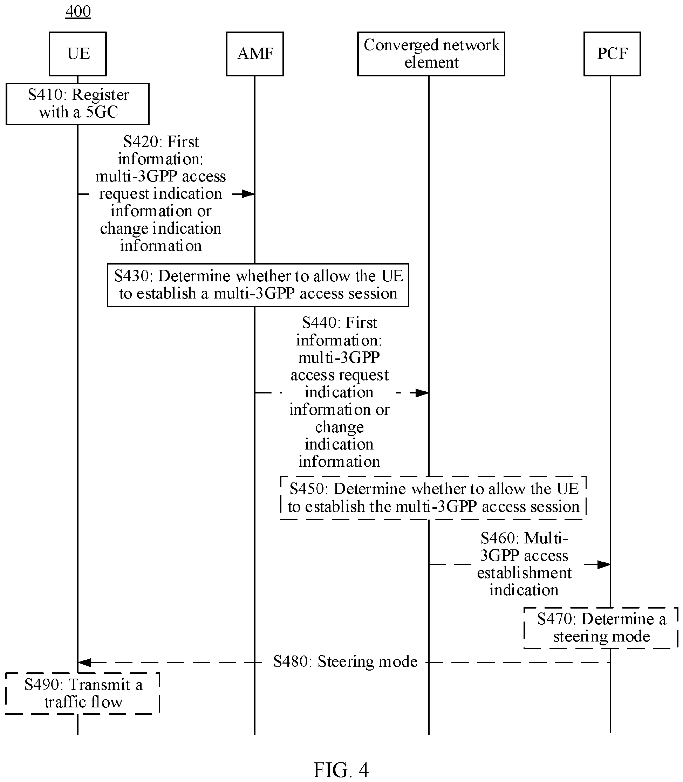

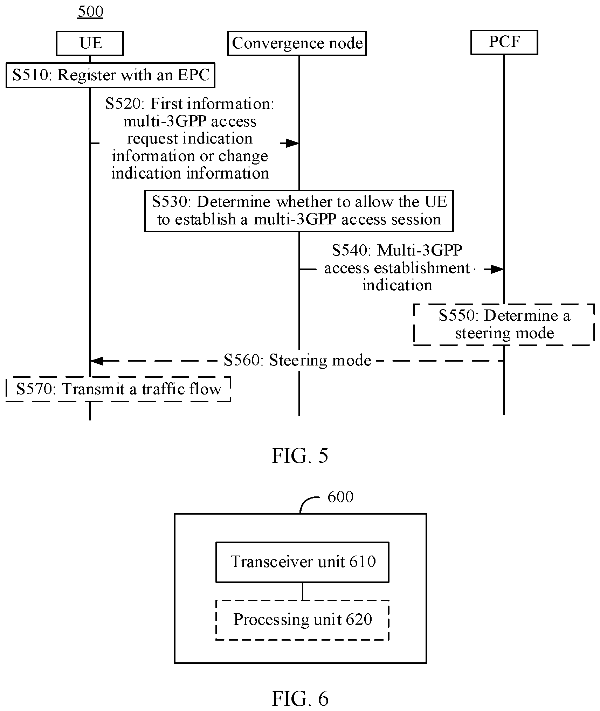

With reference to FIG. 3, the foregoing describes a specific manner in which the control network element determines whether to allow the UE to establish the multi-3GPP access session. With reference to FIG. 4 and FIG. 5, the following respectively describes in detail manners in which the control network element determines, when the UE first registers with the 5GC and then registers with the EPC and when the UE first registers with the EPC and then registers with the 5GC, whether to allow the UE to establish the multi-3GPP access session.

FIG. 4 is a diagram of a communication method 400 according to an embodiment of this application. The method 400 may include the following steps.

S410: A UE registers with a 5GC by using an NR connection.

It should be understood that the UE performs 5GC registration, and receives, in a registration process, a Network support of Interworking without N26 indication sent by a network side. The indication indicates that the network side supports an EPC and 5GC interaction process with a non-N26 interface.

S420: The UE sends first information to an AMF.

Correspondingly, the AMF receives the first information from the UE.

It should be understood that when the UE supports dual registration to the EPC and the 5GC, and the network side supports Network support of Interworking without N26, the UE sends the first information to the AMF.

The first information includes multi-3GPP access request indication information or change indication information.

Optionally, the first information further includes capability indication information.

It should be noted that the AMF may be the control network element in S320. A process in which the UE sends the first information to the AMF in S420 is similar to the process in which the UE sends the first information to the control network element in S320. To avoid repetition, details are not described herein again.

S430: The AMF determines, based on the first information, whether to allow the UE to establish a multi-3GPP access session.

It should be understood that after receiving the first information from the UE, the AMF determines, based on the first information and subscription data of the UE, whether to allow the UE to establish the multi-3GPP access session.

It should be noted that a process in which the AMF determines, based on the first information, whether to allow the UE to establish the multi-3GPP access session in S430 is similar to the process in which the control network element determines, based on the first information, whether to allow the UE to establish the multi-3GPP access session in S330. To avoid repetition, details are not described herein again.

It should be understood that when the AMF does not allow the UE to establish the multi-3GPP access session, the AMF further determines whether to allow the UE to establish a dual-access PDU session or a single-access PDU session. When the AMF allows the UE to establish the dual-access PDU session or the single-access PDU session, the AMF sends a PDU session establishment request message to a convergence network element. Optionally, the PDU session establishment request message includes the change indication information.

The convergence network element is a node having a plurality of control network element capabilities, for example, a node having an SMF capability and a PGW-C capability. This is not limited in this application.

When the AMF allows the UE to establish the multi-3GPP access session, the AMF sends the first information to the convergence network element. The method procedure shown in FIG. 4 may further include the following steps.

S440: The AMF sends the first information to the convergence network element.

Correspondingly, the convergence network element receives the first information from the AMF.

It should be understood that the AMF may include the first information in information such as the PDU session establishment request message, a PDU session update request message, and an uplink non-standalone networking transmission message, and send the information to the convergence network element. This is not limited in this application.

Optionally, in S450, the convergence network element determines, based on the first information, whether to allow the UE to establish the multi-3GPP access session.

It should be understood that after receiving the first information from the AMF, the convergence network element determines, based on the first information and the subscription data of the UE, whether to allow the UE to establish the multi-3GPP access session.

It should be noted that the convergence network element may be the control network element in S330. A process in which the convergence network element determines, based on the first information, whether to allow the UE to establish the multi-3GPP access session in S450 is similar to the process in which the control network element determines, based on the first information, whether to allow the UE to establish the multi-3 GPP access session in S330. To avoid repetition, details are not described herein again.

It should be understood that when the convergence network element does not allow the UE to establish the multi-3GPP access session, the convergence network element sends a PDU session establishment failure message to the UE.

When the convergence network element allows the UE to establish the multi-3GPP access session, the convergence network element requests a PCF to determine a steering mode used by the UE for traffic flow transmission. The method procedure shown in FIG. 4 may further include the following steps.

S460: The convergence network element sends a multi-3 GPP access establishment indication to the PCF.

Correspondingly, the PCF receives the multi-3GPP access establishment indication from the convergence network element.

The multi-3GPP access establishment indication indicates the PCF to determine the steering mode.

Optionally, in S470, the PCF determines the steering mode.

It should be understood that, after receiving the multi-3GPP access establishment indication from the convergence network element, the PCF determines the steering mode based on the multi-3GPP access establishment indication.

It should be understood that the PCF may generate the steering mode based on the subscription data of the UE and/or a local policy. This is not limited in this application.

Specifically, the steering mode includes at least one of the following: an active-standby mode with a secondary steering mode, a priority-based mode with a secondary steering mode, a load-balancing mode with a secondary steering mode, and a multi-3GPP access steering mode.

It should be noted that, for the foregoing steering mode, refer to the descriptions in S340. To avoid repetition, details are not described herein again.

Further, the PCF sends the steering mode to the UE. The method procedure shown in FIG. 4 may further include the following steps.

S480: The PCF sends the steering mode to the UE.

Correspondingly, the UE receives the steering mode from the PCF.

Specifically, the PCF sends the steering mode to the convergence network element, and the convergence network element includes the steering mode in information such as a PDU session reply message and forwards the information to the UE through the AMF.

Optionally, the convergence network element includes a multi-3GPP access establishment success indication in the information such as the PDU session reply message and sends the information to the UE through AMF forwarding.

Optionally, when the convergence network element allows the UE to establish the dual-access PDU session or the single-access PDU session, the convergence network element forwards a dual-access PDU session establishment success indication or a single-access PDU session establishment success indication to the UE through the AMF.

It should be understood that when the convergence network element allows the UE to establish the multi-3GPP access session, the convergence network element does not indicate the AMF to allocate an EPC bearer identity.

It should be understood that the convergence network element may further send a PFCP session establishment request message or a PFCP session update request message to a UPF, where the message carries the steering mode, so that the UPF performs downlink traffic flow steering based on the steering mode.

It should be understood that, if the UE currently registers with a non-3 GPP side, the convergence network element initiates, based on the conventional technology, a connection establishment procedure to a non-3GPP access gateway.

Further, after receiving the steering mode, the UE transmits a traffic flow. The method procedure shown in FIG. 4 may further include the following steps.

S490: The UE transmits the traffic flow.

It should be understood that, after receiving the steering mode, the UE stores the steering mode, and performs uplink traffic flow steering based on the steering mode.

Optionally, after receiving the multi-3 GPP access establishment success indication from the convergence network element, the UE determines that a current session is the multi-3GPP access session.

Optionally, after receiving the dual-access PDU session establishment success indication from the convergence network element, the UE determines that a current session is the dual-access PDU session supporting LTE and NR.

It should be noted that, after the UE completes registering with the 5GC by using NR, the UE is connected to LTE, initiates a PDN session establishment procedure to the EPC, and selects, via a key control node (mobility management entity, MME), the same convergence network element as that in the NR connection to establish a PDN connection. For the PDN session establishment procedure, refer to the conventional technology. Details are not described herein.

In this case, the UE completes procedures for establishing both a connection to the 5GC by using NR and a connection to the EPC by using LTE. If the UE also establishes a non-3GPP connection, the UE completes a multi-3GPP access connection establishment process. Further, the UE performs uplink traffic steering on a user plane by using the steering mode.

According to the foregoing solution, the control network element can determine, based on the first information of the terminal device, whether the UE can support a plurality of 3GPP connections at the same time. When the UE can support the plurality of 3 GPP connections at the same time, the UE completes, based on the steering mode determined by the PCF, a multi-3GPP access establishment procedure of registering with the 5GC by using NR and registering with the EPC by using LTE.

FIG. 5 is a diagram of a communication method 500 according to an embodiment of this application. The method 500 may include the following steps.

S510: A UE registers with an EPC through an LTE connection.

It should be understood that the UE performs EPC registration, and receives, in a registration process, a Network support of Interworking without N26 indication sent by a network side. The indication indicates that the network side supports an EPC and 5GC interaction process with a non-N26 interface.

S520: The UE sends first information to a convergence network element.

Correspondingly, the convergence network element receives the first information from the UE.

It should be understood that, when the UE supports dual registration to the EPC and the 5GC, and the network side supports Network support of Interworking without N26, the UE sends the first information to an MME, and the MME forwards the first information to the convergence network element.

The first information includes multi-3GPP access request indication information or change indication information.

Optionally, the first information further includes capability indication information.

It should be understood that the UE may include the first information in information such as a protocol configuration option (protocol configuration option, PCO) parameter and send the information to the convergence network element through MME forwarding. This is not limited in this application.

It should be noted that a convergence node may be the control network element in S320. A process in which the UE sends the first information to the convergence node in S520 is similar to the process in which the UE sends the first information to the control network element in S320. To avoid repetition, details are not described herein again.

S530: The convergence network element determines, based on the first information, whether to allow the UE to establish a multi-3GPP access session.

It should be understood that after receiving the first information, the convergence network element determines, based on the first information and subscription data of the UE, whether to allow the UE to establish the multi-3GPP access session.

It should be noted that a process in which the convergence network element determines, based on the first information, whether to allow the UE to establish the multi-3GPP access session in S530 is similar to the process in which the convergence network element determines, based on the first information, whether to allow the UE to establish the multi-3GPP access session in S450. To avoid repetition, details are not described herein again.

Optionally, when the convergence network element does not allow the UE to establish the multi-3GPP access session, the convergence network element sends a PDU session establishment failure message to the UE.

Optionally, when the convergence network element does not allow the UE to establish the multi-3GPP access session, if the first information includes the change indication information, the convergence network element further determines whether to allow the UE to establish a dual-access PDU session or a single-access PDU session. When the convergence network element allows the UE to establish the dual-access PDU session or the single-access PDU session, the convergence network element sends a PDU session establishment request message to the convergence network element. Optionally, the PDU session establishment request message includes the change indication information.

When the convergence network element allows the UE to establish the multi-3GPP access session, the convergence network element requests a PCF to determine a steering mode used by the UE for traffic flow transmission. The method procedure shown in FIG. 5 may further include the following steps.

S540: The convergence network element sends a multi-3 GPP access establishment indication to the PCF.

Correspondingly, the PCF receives the multi-3GPP access establishment indication from the convergence network element.

The multi-3GPP access establishment indication indicates the PCF to determine the steering mode.

Optionally, in S550, the PCF determines the steering mode.

It should be understood that, after receiving the multi-3GPP access establishment indication from the convergence network element, the PCF determines the steering mode based on the multi-3GPP access establishment indication.

It should be understood that the PCF may generate the steering mode based on the subscription data of the UE and/or a local policy. This is not limited in this application.

Specifically, the steering mode includes at least one of the following: an active-standby mode with a secondary steering mode, a priority-based mode with a secondary steering mode, a load-balancing mode with a secondary steering mode, and a multi-3GPP access steering mode.

It should be noted that, for the foregoing steering mode, refer to the descriptions in S340. To avoid repetition, details are not described herein again.

Further, the PCF sends the steering mode to the UE. The method procedure shown in FIG. 5 may further include the following steps.

S560: The PCF sends the steering mode to the UE.

Correspondingly, the UE receives the steering mode from the PCF.

Specifically, the PCF sends the steering mode to the convergence network element, and the convergence network element includes the steering mode in information such as a PDU session reply message and sends the information to the UE through MME forwarding.

Optionally, the convergence network element includes a multi-3GPP access establishment success indication in information such as a PDN session reply message and sends the information to the UE through MME forwarding.

Optionally, when the convergence network element allows the UE to establish the dual-access PDU session or the single-access PDU session, the convergence network element includes a dual-access PDU session establishment success indication or a single-access PDU session establishment success indication in the PCO parameter and forwards the PCO parameter to the UE through the MME.

Further, after receiving the steering mode, the UE transmits a traffic flow. The method procedure shown in FIG. 5 may further include the following steps.

S570: The UE transmits the traffic flow.

It should be understood that, after receiving the steering mode, the UE stores the steering mode, and performs uplink traffic flow steering based on the steering mode.

Optionally, after receiving the multi-3 GPP access establishment success indication from the convergence network element, the UE determines that a current session is the multi-3GPP access session.

Optionally, after receiving the dual-access PDU session establishment success indication from the convergence network element, the UE determines that a current session is the dual-access PDU session supporting LTE and NR.

It should be noted that, after the UE completes registering with the EPC by using LTE, the UE is connected to the 5GC, and initiates a PDU session establishment procedure to the 5GC. A specific process is shown in the method in FIG. 4.

In this case, the UE completes procedures for establishing both a connection to the 5GC by using NR and a connection to the EPC by using LTE. If the UE also establishes a non-3GPP connection, the UE completes a multi-3GPP access connection establishment process. Further, the UE performs uplink traffic steering on a user plane by using the steering mode.

According to the foregoing solution, the control network element can determine, based on the first information of the terminal device, whether the UE can support a plurality of 3GPP connections at the same time. When the UE can support the plurality of 3 GPP connections at the same time, the UE completes, based on the steering mode determined by the PCF, a multi-3GPP access establishment procedure of registering with the 5GC by using NR and registering with the EPC by using LTE.

It may be understood that the examples in FIG. 2 to FIG. 5 in embodiments of this application are merely intended to help a person skilled in the art understand embodiments of this application, but are not intended to limit embodiments of this application to specific scenarios in the examples. Definitely, a person skilled in the art can make various equivalent modifications or changes based on the examples shown in FIG. 3 to FIG. 5, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in embodiments of this application, some message names, such as the first information or the multi-3GPP access request indication information, are involved. It should be understood that the names do not limit the protection scope of embodiments of this application.

It may be further understood that, in the foregoing method embodiments, the method and the operation implemented by the terminal device may alternatively be implemented by a component (for example, a chip or a circuit) of the terminal device. In addition, the method and the operation implemented by the control network element may alternatively be implemented by a component (for example, a chip or a circuit) of the control network element. This is not limited. Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

It should be understood that, a control network element or a terminal device may perform some or all steps in the foregoing embodiments. These steps or operations are only examples. In this embodiment of this application, another operation or variants of various operations may be further performed. In addition, the steps may be performed in another order different from that presented in the foregoing embodiments, and not all the operations in the foregoing embodiments may be performed.

The foregoing describes in detail the communication methods provided in embodiments of this application with reference to FIG. 3 to FIG. 5. The following describes in detail the communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the foregoing method embodiments. For brevity, some content is not described again.

FIG. 6 is a schematic block diagram of a communication apparatus according to an embodiment of this application. The apparatus 600 includes a transceiver unit 610, and the transceiver unit 610 may be configured to implement a corresponding communication function. The transceiver unit 610 may also be referred to as a communication interface or a communication unit.

Optionally, the apparatus 600 may further include a processing unit 620, and the processing unit 620 may be configured to perform data processing.

Optionally, the apparatus 600 further includes a storage unit. The storage unit may be configured to store instructions and/or data. The processing unit 620 may read the instructions and/or the data in the storage unit, so that the apparatus implements actions of different terminal devices in the foregoing method embodiments, for example, actions of the control network element or the terminal device.

The apparatus 600 may be configured to perform actions performed by the control network element or the terminal device in the foregoing method embodiments. In this case, the apparatus 600 may be the control network element or the terminal device, or a component of the control network element or the terminal device. The transceiver unit 610 is configured to perform receiving and sending related operations of the control network element or the terminal device in the foregoing method embodiments. The processing unit 720 is configured to perform processing related operations of the control network element or the terminal device in the foregoing method embodiments.

It should be further understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the control network element or the terminal device in the foregoing embodiments, and may be configured to perform procedures and/or steps corresponding to the control network element or the terminal device in the foregoing method embodiments; or the apparatus 600 may be specifically the control network element or the terminal device in the foregoing embodiments, and may be configured to perform procedures and/or steps corresponding to the control network element or the terminal device in the foregoing method embodiments. To avoid repetition, details are not described herein again.

The apparatus 600 in the foregoing solutions has a function of implementing corresponding steps performed by the control network element or the terminal device in the foregoing methods, or the apparatus 600 in the foregoing solutions has a function of implementing corresponding steps performed by the control network element or the terminal device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit 610 may alternatively be a transceiver circuit (for example, may include a receiving circuit and a sending circuit), and the processing unit may be a processing circuit.

It should be noted that the apparatus in FIG. 6 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

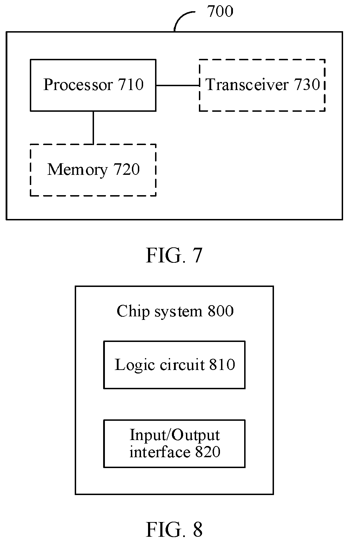

As shown in FIG. 7, an embodiment of this application further provides another communication apparatus 700. The apparatus 700 includes a processor 710. The processor 710 is coupled to a memory 720, the memory 720 is configured to store a computer program or instructions and/or data, and the processor 710 is configured to: execute the computer program or the instructions stored in the memory 720, or read the data stored in the memory 720, to perform the method in the foregoing method embodiments.

Optionally, there are one or more processors 710.

Optionally, there are one or more memories 720.

Optionally, the memory 720 and the processor 710 are integrated together, or are disposed separately.

Optionally, as shown in FIG. 7, the apparatus 700 further includes a transceiver 730, and the transceiver 730 is configured to receive and/or send a signal. For example, the processor 710 is configured to control the transceiver 730 to receive and/or send a signal.

In a solution, the apparatus 700 is configured to implement operations performed by the control network element or the terminal device in the foregoing method embodiments.

For example, the processor 710 is configured to execute the computer program or the instructions stored in the memory 720, to implement related operations of the terminal device in the foregoing method embodiments, for example, the terminal device in any one of the embodiments shown in FIG. 2 to FIG. 5, or the method of the terminal device in any one of the embodiments shown in FIG. 2 to FIG. 5.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other suitable type of memory.

As shown in FIG. 8, an embodiment of this application provides a chip system 800. The chip system 800 (or may be referred to as a processing system) includes a logic circuit 810 and an input/output interface (input/output interface) 820.

The logic circuit 810 may be a processing circuit in the chip system 800. The logic circuit 810 may be coupled to a storage unit, and invoke instructions in the storage unit, so that the chip system 800 can implement the methods and functions in embodiments of this application. The input/output interface 820 may be an input/output circuit in the chip system 800, and outputs information processed by the chip system 800, or inputs to-be-processed data or signaling information to the chip system 800 for processing.

In a solution, the chip system 800 is configured to implement operations performed by the control network element or the terminal device in the foregoing method embodiments.

For example, the logic circuit 810 is configured to implement processing related operations performed by the control network element in the foregoing method embodiments, for example, a processing related operation performed by the terminal device in the embodiment shown in either FIG. 2 to FIG. 5. The input/output interface 820 is configured to implement sending and/or receiving related operations performed by the terminal device in the foregoing method embodiments, for example, a sending and/or receiving related operation performed by the terminal device in the embodiment shown in either FIG. 2 to FIG. 5.

An embodiment of this application further provides a computer-readable storage medium. The computer-readable storage medium stores computer instructions used to implement the method performed by the control network element or the terminal device in the foregoing method embodiments.

For example, when the computer program is executed by a computer, the computer is enabled to implement the method performed by the control network element or the terminal device in the foregoing method embodiments.

An embodiment of this application further provides a computer program product, including instructions. When the instructions are executed by a computer, the method performed by the control network element or the terminal device in the foregoing method embodiments is implemented.

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a control network element, first information from a terminal device UE, wherein the first information comprises multi-3rd generation partnership project 3GPP access request indication information or change indication information; and
determining, by the control network element based on the first information, whether to allow the UE to establish a multi-3GPP access session, wherein
the multi-3GPP access request indication information indicates that the UE requests to establish the multi-3GPP access session, and the change indication information indicates that the UE allows the control network element to change from establishing a dual access session or a single access session to establishing the multi-3 GPP access session.

2. The method according to claim 1, wherein the multi-3GPP access session comprises a protocol data unit PDU session and/or a public data network PDN session.

3. The method according to claim 1 or 2, wherein the determining, by the control network element based on the first information, whether to allow the UE to establish a multi-3GPP access session comprises:
determining, by the control network element based on the first information and subscription data of the UE, whether to allow the multi-3GPP access session to be established.

4. The method according to claim 3, wherein when the first information comprises the multi-3 GPP access request indication information, the determining, by the control network element based on the first information and subscription data of the UE, whether to allow the multi-3GPP access session to be established comprises:
determining, by the control network element based on the multi-3GPP access request indication information, that the UE requests to establish the multi-3GPP access session; and
determining, by the control network element based on the subscription data of the UE, whether to allow the UE to establish the multi-3GPP access session.

5. The method according to claim 3, wherein when the first information comprises the change indication information, the determining, by the control network element based on the first information and subscription data of the UE, whether to allow the multi-3GPP access session to be established comprises:
determining, by the control network element based on the change indication information, that the UE allows the multi-3GPP access session to be established; and
determining, by the control network element based on the subscription data of the UE, whether the multi-3GPP access session can be established for the UE.

6. The method according to any one of claims 1 to 5, wherein when the control network element allows the UE to establish the multi-3GPP access session, the method comprises:
sending, by the control network element, a multi-3GPP access establishment indication to a policy control network element PCF, wherein the multi-3GPP access establishment indication is used to determine a steering mode;
receiving, by the control network element, the steering mode from the PCF, wherein the steering mode indicates a traffic flow transmission sequence in the multi-3GPP access session; and
sending, by the control network element, the steering mode to the UE.

7. The method according to claim 6, wherein the steering mode comprises at least one of the following: an active-standby mode with a secondary steering mode, a priority-based mode with a secondary steering mode, a load-balancing mode with a secondary steering mode, and a multi-3GPP access steering mode, wherein
the multi-3GPP access steering mode indicates a priority sequence of a plurality of 3GPP access technologies.

8. The method according to claim 7, wherein the active-standby mode with a secondary steering mode comprises an active-standby steering mode and a secondary steering mode, wherein
the active-standby steering mode indicates that 3GPP access or non-3rd generation partnership project non-3GPP access is an active access technology, and the secondary steering mode indicates that LTE access or NR access is an active access technology.

9. The method according to claim 7, wherein the priority-based mode with a secondary steering mode comprises a priority-based steering mode and a secondary steering mode, wherein
the priority-based steering mode indicates priorities of 3GPP access and non-3GPP access, and the secondary steering mode indicates a priority sequence of LTE access and NR access.

10. The method according to claim 7, wherein the load-balancing mode with a secondary steering mode comprises a load-balancing steering mode and a secondary steering mode, wherein
the load-balancing steering mode indicates a steering ratio of 3 GPP access to non-3 GPP access, and the secondary steering mode indicates a steering ratio of LTE access to NR access.

11. A communication method, comprising:
sending, by a terminal device UE, first information to a control network element, wherein the first information is used to determine whether to allow the UE to establish a multi-3GPP access session, and the first information comprises multi-3GPP access request indication information or change indication information, wherein
the multi-3GPP access request indication information indicates that the UE requests to establish the multi-3GPP access session, and the change indication information indicates that the UE allows the control network element to change from establishing a dual access session or a single access session to establishing the multi-3 GPP access session.

12. The method according to claim 11, wherein the method further comprises:
obtaining, by the UE, a dual-registration capability indication, wherein the dual-registration capability indication indicates that the UE is allowed to register with a first network and a second network.

13. The method according to claim 11, wherein the multi-3GPP access session comprises a protocol data unit PDU session and/or a public data network PDN session.

14. The method according to any one of claims 11 to 13, wherein when the control network element allows the UE to establish the multi-3GPP access session, the method further comprises:
receiving, by the UE, a steering mode from the control network element, wherein the steering mode indicates a traffic flow transmission sequence in the multi-3GPP access session; and
transmitting, by the UE, a traffic flow based on the steering mode.

15. The method according to claim 14, wherein the steering mode comprises at least one of the following: an active-standby mode with a secondary steering mode, a priority-based mode with a secondary steering mode, a load-balancing mode with a secondary steering mode, and a multi-3GPP access steering mode, wherein
the multi-3GPP access steering mode indicates a priority sequence of a plurality of 3GPP access technologies.

16. The method according to claim 15, wherein the active-standby mode with a secondary steering mode comprises an active-standby steering mode and a secondary steering mode, wherein
the active-standby steering mode indicates that 3GPP access or non-3GPP access is an active access technology, and the secondary steering mode indicates that LTE access or NR access is an active access technology.

17. The method according to claim 15, wherein the priority-based mode with a secondary steering mode comprises a priority-based steering mode and a secondary steering mode, wherein
the priority-based steering mode indicates priorities of 3GPP access and non-3GPP access, and the secondary steering mode indicates a priority sequence of LTE access and NR access.

18. The method according to claim 15, wherein the load-balancing mode with a secondary steering mode comprises a load-balancing steering mode and a secondary steering mode, wherein
the load-balancing steering mode indicates a steering ratio of 3 GPP access to non-3 GPP access, and the secondary steering mode indicates a steering ratio of LTE access to NR access.

19. A communication apparatus, comprising:
a processor, configured to execute a computer program stored in a memory, to enable the communication apparatus to perform the method according to any one of claims 1 to 18.

20. A computer-readable storage medium, wherein the computer-readable storage medium stores a computer program or instructions, and when the computer program or the instructions are executed by a processor, the method according to any one of claims 1 to 18 is performed.

21. A computer program product comprising instructions, wherein when the computer program product runs on a computer, the method according to any one of claims 1 to 18 is performed.

22. A chip system, comprising a processor, configured to invoke a computer program or instructions from a memory and run the computer program or the instructions, to enable a communication apparatus in which the chip system is installed to implement the method according to any one of claims 1 to 18.
